# EUROPEAN PATENT SPECIFICATION

(11) **EP 1 259 798 B1**
(45) Date of publication and mention of the grant of the patent: **16.04.2008**
(21) Application number: 00993909.1
(22) Date of filing: 08.12.2000
(51) Int. Cl.: G01N 31/22

(54) **DETERMINATION OF LOW RANGE TOTAL CHLORINE RESIDUALS**
BESTIMMUNG VON GERINGEN MENGEN GESAMTCHLOR IN RÜCKSTÄNDEN
DETERMINATION DE FAIBLES NIVEAUX DE CHLORE RESIDUEL TOTAL

(30) Priority: 10.12.1999 US 458455
(43) Date of publication of application: 27.11.2002
(73) Proprietor: Hach Company, Loveland, CO 80539 (US)
(72) Inventor: STRIPE, Wayne, A., Osceola,IN 46561 (US); RAND, Phillip DI, deceased (US)
(74) Representative: Belcher, Simon James
(86) International application number: PCT/US2000/042736
(87) International publication number: WO 2002/039081

(56) References cited:
- US-A- 5 811 254
- DATABASE WPI Section Ch, Week 199618 Derwent Publications Ltd., London, GB; Class E14, AN 1996-178613 XP002203598 -& RU 2 042 127 C (AS UKR MONOCRYSTALS INST), 20 August 1995 (1995-08-20)

## Description

### Field of the Invention

This invention relates to a test reagent for colorimetrically determining levels of total chlorine residuals in a fluid test sample. More particularly, the invention relates to a test reagent that can be impregnated onto a carrier matrix which when contacted with a fluid test sample will result in the formation of a color proportional to the amount of total chlorine residual present.

### Background of the Invention

The use of chlorine as a disinfectant for water supplies and various types of equipment, such as medical and food processing equipment is common. After chlorine disinfection, for example, of medical equipment such as a hemodialysis unit, it is essential that the remaining feed water used to prepare dialysate be totally free of any potential chlorine contaminants for proper rinsing. Therefore, it is essential for safe use of a hemodialysis unit that an accurate test be available to indicate the total chlorine level in feed water, and that the test be capable of detecting chlorine levels at or above the maximum allowable concentration of 0.1 milligram per liter (ppm). The test must not only test for free available chlorine, but also must test for combined available chlorine as well to ensure that all potential chlorine sources are detected. Such tests must be sensitive to chlorine, whether free, or combined as readily hydrolyzable compounds containing available chlorine, such as monochloroamine or the like.

The available chlorine family is comprised of compounds which, when in aqueous solution, yield solutions of hypochlorous acid. The available chlorine family is further divided into compounds containing free available chlorine and compounds containing combined available chlorine. The sum of free available chlorine and combined available chlorine is termed total available chlorine. In order for the chlorine detection tests for medical equipment to provide meaningful results, it is essential that the tests measure total available chlorine and, at the same time, be sensitive to combined available chlorine. If the test is not sensitive to combined available chlorine, a false safe reading can occur.

The dilemma with respect to the medical device industry is that chlorine is commonly used as a disinfectant. After disinfecting, and before patient use of the medical equipment, the lines and all internal parts of the medical equipment unit must be substantially free of free available chlorine or combined available chlorine. Moreover, accurate detection tests must not only be sensitive to total available chlorine; the tests must be able to discriminate between extremely low residual levels as well. While some such tests have been available in the past, they are slow, inaccurate, or require such meticulous procedures that the procedures themselves are often incorrectly followed, leading to erroneous conclusions with respect to total residual chlorine. As used herein, the term total residual chlorine means free chlorine and combined chlorine (monochloroamines and other chlorine compounds). Further background details with respect to problems associated with chlorine residuals can be found in U.S. Patent No. 5,888,758.

RU-C-2042127 discloses a means for determining total chlorine comprising a carrier impregnated with Michler's ketone and EDTA.

U.S. Patent 5,811,254 teaches a composition for detecting total available chlorine containing tetramethylbenzinidine and a non-ionic surfactant.

It can be seen from the above description that there is a real and continuing need for a quick, easy, and simple to use test strip system to accurately detect total chlorine. There is also a need for a simple indicator system for use with a colorimetric comparison chart with sensitive color changes that accurately discriminates between very low levels of chlorine.

This invention has as its primary objective the fulfillment of these needs, using a color indicator system which can detect low levels and discriminate low level differences such as the difference between 0.1, 0.5, 1, and 3 ppm.

Since most test strips are only capable of detecting 0.5 ppm chlorine residuals at best, and the present system will detect 0.1 ppm, it is highly advantageous, fulfills the existing need, and meets the objectives of the present invention.

### Summary of the Invention

It has now been found that a highly effective and efficient test strip, test strip reagent, and method for measuring total chlorine residuals at very low levels can be achieved by the utilization of the indicator substance Michler's thioketone in combination with a chlorine inert nonionic fluorosurfactant.

### Detailed Description of the Invention

Michler's thioketone is the common name for 4,4'-bis(dimethylamino)thiobenzophenone. Low levels of total chlorine refers to levels of total chlorine under 0.5 ppm.

Those skilled in the art will appreciate that effective color indicators for test strips may require use of wetting agents to effectively capture the color indicator in or on the test strip. In this instance, an essential part of the indicator system or test reagent is the use of a color indicator, i.e., Michler's thioketone in combination with a wetting agent surfactant that is inert to any residual chlorine. The surfactant facilitates wetting of the paper matrix of the test strip but the surfactant must not consume any of the chlorine by reaction. Satisfactory surfactants that may be used in combination with the Michler's thioketone include nonionic fluorosurfactants. Suitable nonionic fluorosurfactants include surfactants sold under the trademark Zonyl^{®} such as Zonyl^{®} FSN. Zonyl^{®} is a registered trademark of DuPont, Wilmington, Delaware, U.S.A. These are generally fluoropolyethylene glycols, present as a mixture of C₃ to C₈, preferably C₅ and C₇, polyfluoroalcohols. They are available from DuPont and are described in detail in bulletins published prior to the filing date of this application. The structure of Zonyl^{®} FSN is RfCH₂CH₂O(CH₂CH₂O)ₓH where Rf represents perfluroalkyl groups illustrated by F(CF₂CF₂)_{y}, x = 0 to about 25, and y = 1 to about 9. Zonyl^{®} FSN, as used herein, refers to the generic formula.

To facilitate capture in or on the test strip, Michler's thioketone should be in solution form, typically dissolved in an effective solvent such as an alcohol. The amount of Michler's thioketone in relationship to the amount of inert fluorosurfactant, such as Zonyl^{®} FSN, on a per liter basis of mix should be generally within these ranges: Michler's thioketone from 50 to 100 mg/L and fluorosurfactant from 4.15 g/L to 16.5 g/L.

The test system accommodates a wide pH range, from about 3 to about 8; however a pH of about 5 is preferred for Michler's thioketone. The pH can be adjusted with typical pH adjusting acid/base reagents such as sodium hydroxide and the like or hydrochloric acid and the like.

A preferred embodiment of the present invention involves the use of a carrier paper matrix (bibulous or non-bibulous) for the test reagent, said carrier adhered to an inert, hydrophobic plastic handle. By using a carrier matrix such as bibulous paper to contain and carry out the test reaction, it has been found that the color stability of the test reagent is significantly improved.

In an illustrative embodiment of the invention, a piece of bibulous filter paper of sufficient porosity and capillary affinity, to cause the fluid being tested to migrate into the paper, is coated or otherwise incorporated or impregnated with the test reagent. When the strip is immersed into a fluid to be tested such as by dipping and/or swishing, test fluid contacts the test reagent. The net result of using such a test strip is that a substantial volume of the substance being detected is made available to contact with the test reagent in a simple dip and read test. The paper, which can be affixed to an inert handle, can be any suitable absorbing matrix, but a preferred paper is Schleicher & Schuell 740E. However, the precise paper matrix does not appear to be critical.

The test reagent, in addition to the two essential ingredients (Michler's thioketone and a nonionic fluorosurfactant) may, as those skilled in the art of preparing test strips know, contain other minors to improve packaging, performance, stability, etc. For example, a pH buffering system such as potassium phosphate, or a polymer monobasic/phosphoric acid can be used. Polymers to improve stability, such as polyvinyl pyrrolidine, etc., can also be used. Of course, a carrier for the indicator or test reagent is used that includes a water solution of the water soluble reagents, and in this case 95% ethanol, to dissolve the Michler's thioketone indicator. Other common carrier solvents may also be used.

An important advantage of the present test system is that the test has great stability; the test is not temperature or humidity sensitive and the test reagent system has a long shelf life. In fact, as far as is presently known to the inventors, this is the most sensitive total chlorine test strip yet developed, since it has the capability of accurately distinguishing total chlorine levels at lower than 0.5 ppm.

In accordance with the present invention, the Michler's thioketone in combination with the nonionic fluorosurfactant, provide the following visual color scheme when testing for total residual chlorine:

| Chlorine Residual Level | | Color Indication |
|---|---|---|
| 0 ppm | = | background yellow of the Michler's thioketone |
| 0.1 ppm | = | yellow/green |
| 0.5 ppm | = | dark green |
| 1 ppm | = | light blue |
| 3 ppm | = | blue. |

By placing a corresponding color comparison chart on the test strip packaging, one can simply dip the test strip into a test fluid and compare the color indication on the test strip to the color comparison chart on the packaging to determine the amount of residual chlorine. Moreover, since the color changes are so dramatically visually different, the test is easy to read, and less prone to procedure or interpretation errors.

The dry test strip can be prepared from the test reagent in the following manner. An alcohol solvent and the Michler's thioketone are mixed; thereafter the water soluble ingredients are mixed, and finally, the fluorosurfactant with any pH buffer is added, and the whole is then homogeneously admixed. The paper matrix is then immerse in the solution. The paper is then dried, optionally in an oven, cut to size, and the pads adhered to the inert plastic handle.

The following examples are offered to further illustrate, but not limit the invention.

### Examples

This test reagent is impregnated onto the test strip in one step. On a first day, a first sub-mix of 95% ethanol and 4,4'-bis(dimethylamino)thiobenzophenone (Michler's ketone), was prepared. The first sub-mix contained 0.527 Kg of 95% ethanol and 0.071 g of Michler's thioketone. A second sub-mix of reagent grade distilled water and 2.25 g of polyvinylpyrrolidine (PVP-K60) with 66.7 grams of water was prepared. Polyvinylpyrrolidine functions as a polymeric stabilizer assisting somewhat in color stability and shelf life. A phosphate/phosphoric acid buffer (200 g water, 1.98 g monobasic potassium phosphate and 0.092 ml of 85% phosphoric acid), along with 8.33 ml of Zonyl^{®} FSN and the pH adjusted with 1.0 N sodium hydroxide and 1.0 N hydrochloric acid to 5.0. The aqueous submixes were combined with the organic submix, and impregnated onto Schleicher & Schuell 740E paper.

The impregnated paper was allowed to air dry and then cut to size to form pads. The amount of chemical per pad (for reagent paper) was calculated by dividing the amount of chemical per liter of mix by the number of pads produced by one liter of mix. The amount of 4,4'-bis(dimethylamino)thiobenzophenone per pad was 1.34µg and the amount of Zonyl^{®} FSN per pad was 158µg. Also included on the pad was 42.4µg of PVP, 37.4µg of potassium phosphate monobasic, and 1.46µg of phosphoric acid. The test reagent impregnated pads were then applied to a strip of plastic using an adherent.

It is worthy of note that one of the innovative features of this strip is that it does not use potassium iodide to produce equivalent response color among free, combined and organic chlorine, but instead uses Michler's thioketone and Zonyl^{®} FSN to achieve the unique color discrimination at detection levels earlier described. The mechanism by which Zonyl^{®} FSN assists the detection of the combined available chlorine is not totally understood, except to say that the Zonyl^{®} FSN certainly assists in the reaction discrimination, and is inert to any chlorine demand, i.e., it does not react with and consume the chlorine. It therefore assists in test accuracy as illustrated in the next field study example.

Water samples were obtained from Nephrology Inc., a local dialysis center in Elkhart, Indiana. Three samples of feed water were obtained, samples I1, 12, and I3. Sample I1 was obtained directly from the tap. Sample 12 was obtained from an outlet at the front of the dialysis machine; a pre-carbon filter sample, 13, was obtained from the final outlet on the dialysis machine, after it had flowed through the whole machine.

**Table 1**

| Sample | Strip at | Titration | Strip in |
|---|---|---|---|
| | Nephrology | | laboratory |
| | Inc. | | |
| I1 | (0.00 ppm) | 0.00 ppm | (0.0 ppm) |
| | yellow | | |
| I2 | (0.0 ppm) | 0.00 ppm | (0.0 ppm) |
| | yellow | | |
| I3 | (0.5 ppm) | 0.48 ppm | (0.5 ppm) |
| | dark green | | |

Overall, the strips and the amperometric titration method showed equivalent responses to the "real" samples from Nephrology Inc., indicating accuracy. Each of the field samples was placed in a 1 L flask and spiked with free chlorine.

Il was spiked to approximately 0.1 ppm using a 1000 ppm free chlorine standard, and then spiked to approximately 0.5 ppm using a 1,000 ppm free chlorine standard.

I2 was spiked to the same levels as I1.

I3 was spiked to approximately 2.0 ppm.

Each of these samples was tested via test strips and titration.

**Table 2**

| Sample | Low Range Total | Titration |
|---|---|---|
| | Chlorine Strips | |
| I1 + ^{~}0.1 ppm Cl₂ | (0.10 ppm) | 0.11 ppm |
| | yellow green | |
| I1 + ^{~}0.5 ppm Cl₂ | (0.5 ppm) | 0.51 ppm |
| | dark green | |
| 12 + ^{~}0.1 ppm Cl₂ | (0.1 ppm) | 0.13 ppm |
| | yellow green | |
| I2 + ^{~}0.5 ppm Cl₂ | (0.71 ppm) | 0.65 ppm |
| | halfway between | |
| | yellow green and | |
| | dark green | |
| I3 + ^{~}2 ppm Cl₂ | (1.7 ppm) | 2.2 ppm |
| | light blue | |

With spiked field samples, the low range total chlorine strips showed they accurately correspond to the known readings and color comparison chart.

## Claims

1. A means for detecting total residual chlorine and colour discriminating between chlorine levels in a low chlorine environment, comprising a test reagent which includes an indicator effective amount of Michler's thioketone and a non-ionic fluorosurfactant.

2. A means as claimed in Claim 1, which comprises a test strip including a matrix carrier for said test reagent.

3. A method for detecting residual chlorine and colour discriminating between chlorine levels in a low chlorine environment, which comprises contacting a fluid test sample with a means as claimed in claim 1 or claim 2 and comparing the colour response obtained to colour responses from standard solutions of chlorine to determine the total residual chlorine concentration in the test solution.

## Patentansprüche

1. Mittel zur Bestimmung der Gesamtmenge von Restchlor und zur Unterscheidung zwischen Chlorgehalten über die Farbe einer geringe Chlormengen enthaltenden Umgebung, welches ein Testreagenz umfasst, das einen als Indikator wirksamen Anteil von Michlers Thioketon und ein nicht ionisches fluoriertes oberflächenaktives Mittel umfasst.

2. Mittel nach Anspruch 1, welches einen Teststreifen mit einem Matrixträger für das Testreagenz umfasst.

3. Verfahren zur Bestimmung von Restchlor und zur Unterscheidung zwischen Chlorgehalten über die Farbe einer geringe Chlormengen enthaltenden Umgebung, welches umfasst: Kontaktieren einer fluiden Messprobe mit einem Mittel nach einem der Ansprüche 1 oder 2 und Vergleichen der erhaltenen Farbantwort mit Farbantworten von Standard-Chlorlösungen zur Bestimmung der Gesamtkonzentration von Restchlor in der Messlösung.

## Revendications

1. Moyen de détection du chlore résiduel total et de discrimination colorimétrique des niveaux de chlore dans un environnement à faible teneur en chlore, comprenant un réactif comprenant une quantité efficace d'indicateur d'une thiocétone de Michler ou un tensioactif fluoré non ionique.

2. Moyen selon la revendication 1, comprenant une bande de test comprenant un support de matrice destiné au réactif.

3. Procédé de détection du chlore résiduel et de discrimination colorimétrique des niveaux de chlore dans un environnement à faible teneur en chlore, comprenant la mise en contact d'un échantillon de test fluide avec un moyen selon l'une quelconque des revendications 1 ou 2 et la comparaison de la sensibilité chromatique obtenue avec les sensibilités chromatiques de solutions standard de chlore pour déterminer la concentration en chlore résiduel total dans la solution de test.
